**Europäisches Patentamt**

**European Patent Office**

**Office européen des brevets**

(19)

(11) Veröffentlichungsnummer : **0 012 849**
**B1**

(12)                    **EUROPÄISCHE PATENTSCHRIFT**

(45) Veröffentlichungstag der Patentschrift :
26.01.83

(51) Int. Cl.³ : **B 29 D   9/08**, B 32 B   5/18

(21) Anmeldenummer : **79104628.7**

(22) Anmeldetag : **21.11.79**

(54) **Verfahren zum Überziehen von porösen Schaumstoffkörpern mit einer Haut aus Polyurethan.**

(30) Priorität : **23.12.78 DE 2856080**

(43) Veröffentlichungstag der Anmeldung :
**09.07.80 Patentblatt 80/14**

(45) Bekanntmachung des Hinweises auf die Patenterteilung : **26.01.83 Patentblatt 83/04**

(84) Benannte Vertragsstaaten :
**AT BE CH FR GB IT NL SE**

(56) Entgegenhaltungen :
**AT B 205 220**
**AT B 224 892**
**DD A 85 955**
**DE A 2 435 510**
**DE B 1 136 097**
**US A 3 547 753**

**Die Akte enthält technische Angaben, die nach dem
Eingang der Anmeldung eingereicht wurden und die
nicht in dieser Patentschrift enthalten sind.**

(73) Patentinhaber : **METZELER SCHAUM GMBH**
**Donaustrasse 51**
**D-8940 Memmingen (DE)**

(72) Erfinder : **Mette, Philipp**
**Ederstrasse 12**
**D-3590 Bad Wildungen-Wega (DE)**

(74) Vertreter : **Michelis, Theodor, Dipl.-Ing.**
**Westendstrasse 131**
**D-8000 München 2 (DE)**

Verfahren zum Überziehen von porösen Schaumstoffkörpern mit einer Haut aus Polyurethan

Die Erfindung betrifft ein Verfahren zum Überziehen von porösen Schaumstoffkörpern, vorzugsweise auf Polyätheroder Polyesterbasis, mit einer luft- und/oder wasserdichten Haut aus Polyurethan, bei dem eine flüssige Polyurethanmasse auf eine blattförmige Trägerfolie aufgegossen und nach der unter Preßdruck erfolgten Verbindung der Polyurethanhaut mit dem Schaumstoffkörper die Trägerfolie abgezogen wird.

Ein derartiges Verfahren ist auf der US-A-3.547.753 bekannt. Dabei ist eine ebenfalls mit einem Polyurethanfilm beschichtete Trägerfolie vorgesehen, die auf die zu beschichtende Schaumstoffplatte aufgelegt und von oben mittels einer Heizplatte beheizt wird, so daß der Polyurethanfilm wieder erweicht und sich innig mit dem zu beschichtenden Schaumstoff verbindet.

Mit einem derartigen Verfahren lassen sich jedoch nur ebene Flächen beschichten und außerdem ist die zusätzliche Zuführung von Wärme erforderlich, um den Polyurethanfilm wieder thermoplastisch zu erweichen.

Demgegenüber liegt der vorliegenden Erfindung die Aufgabe zugrunde, ein Verfahren zu schaffen, mit dem ein poröser Schaumstoffkörper ohne externe Wärmezufuhr mit einer derartigen Polyurethanhaut überzogen werden kann, wobei darüber hinaus dieser Schaumstoffkörper eine unebene oder sogar eine stark profilierte Oberfläche aufweisen kann.

Zur Lösung dieser Aufgabe ist erfindungsgemäß vorgesehen, daß die auf die Trägerfolie aufgegossene Polyurethanmasse angetrocknet und im noch leicht klebrigen Zustand auf den zu überziehenden Schaumstoffkörper aufgepreßt wird, dessen betreffende Oberfläche stark profiliert ist und vorher mit einem Kleber versehen wurde.

Damit ist es also möglich, auch stark profilierte Schaumstoffkörper ohne externe Wärmezufuhr mit einer derartigen Polyurethanhaut zu versehen.

Weitere zweckmäßige Ausgestaltungen der Erfindung sind in den Unteransprüchen genannt.

Anhand einer schematischen Zeichnung ist das erfindungsgemäße Verfahren bei einem typischen Anwendungsbeispiel erläutert. Dabei zeigen :

Figur 1  einen Teilquerschnitt durch einen profilierten Schaumstoffkörper mit der beschichteten Trägerfolie vor dem Verpressen und

Figur 2  den Schaumstoffkörper nach der fertigen Beschichtung.

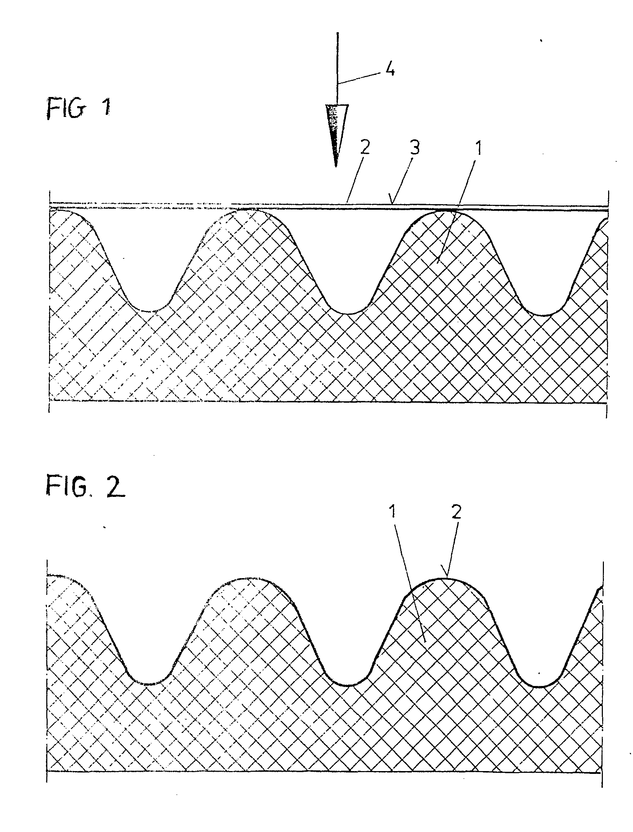

Wie aus Fig. 1 zu ersehen ist, ist auf den profilierten Schaumstoffkörper 1 zunächst das mit einer Polyurethanmasse 2 beschichtete siliconisierte Papier 3 frei aufgelegt. Anschließend wird der Schaumstoffkörper 1 mit diesem Papier 3 in eine Presse eingeführt und in Richtung des Pfeiles 4 so zusammengepreßt, daß die noch klebrige Polyurethanmasse sich auf der ganzen Oberfläche des Schaumstoffkörpers, die vorher noch mit einem Klebstoff bestrichen wurde, fest anlegt. Nach Entnahme aus der Presse entspannt sich der Schaumstoffkörper 1 wieder auf seine ursprüngliche Form, wie aus Fig. 2 zu ersehen ist, wobei die profilierte Oberfläche jetzt von der Polyurethanhaut 2 vollständig und gleichmäßig abgedeckt ist. Das siliconisierte Papier 3 kann anschließend leicht entfernt werden.

Nach endgültigem Trocknen der Poliurethanmasse sowie Abbinden des entsprechenden Klebers ist die Haut von dem Schaumstoffkörper nicht mehr zu trennen.

**Ansprüche**

1. Verfahren zum Überziehen von porösen Schaumstoffkörpern (1), vorzugsweise auf Polyäther- oder Polyesterbasis, mit einer luft- und/ oder wasserdichten Haut aus Polyurethan, bei dem eine flüssige Polyurethanmasse (2) auf eine blattförmige Trägerfolie (3) aufgegossen und nach der unter Preßdruck erfolgten Verbindung der Polyurethanhaut (2) mit dem Schaumstoffkörper (1) die Trägerfolie (3) abgezogen wird, dadurch gekennzeichnet, daß die auf die Trägerfolie (3) aufgegossene Polyurethanmasse (2) angetrocknet und im noch leicht klebringen Zustand auf den zu überziehenden Schaumstoffkörper (1) aufgepreßt wird, dessen betreffende Oberfläche vorher mit einem Kleber versehen wurde.

2. Verfahren nach Anspruch 1, dadurch gekennzeichnet, daß als Trägerfolie (3) ein siliconisiertes Papier verwendet wird.

3. Verfahren nach Anspruch 1 oder 2, dadurch gekennzeichnet, daß die mit einer Polyurethanmasse (2) beschichtete Trägerfolie (3) im Umdruckverfahren auf den Schaumstoffkörper (1) aufgebracht wird.

4. Verfahren nach Anspruch 1 bis 3, gekennzeichnet durch die Verwendung einer Trägerfolie (3) mit leicht geprägter bzw. gemusterter Oberfläche.

**Claims**

1. A method of coating porous foam bodies (1), preferably based on polyether or polyester, with an air-tight and/or water-tight skin of polyurethane, in which method a liquid polyurethane composition (2) is cast onto a sheetlike carrier film (3) and after the polyurethane coating (2) has been joined to the foam body (1) by pressing power the carrier film (3) is drawn off, characterised in that the polyurethane composition (2) cast onto the carrier film (3) is dried on and, while it is still slightly tacky, is pressed onto the foam body (1) to be coated, the relevant surface of which has previously been provided with an adhesive.

2. A method according to claim 1, characterised in that the carrier film (3) is a silicone-treated paper.

3. A method according to claim 1 or 2, characterised in that the carrier film (3) coated with a polyurethane composition (2) is applied to the foam body (1) in the transfer process.

4. A method according to claims 1 to 3, characterised by the use of a carrier film (3) having a lightly stamped or embossed surface.

**Revendications**

1. Procédé pour revêtir des corps poreux en mousse (1), de préférence à base de polyéther ou de polyester, d'une peau étanche à l'air et/ou à l'eau en polyuréthane, qui consiste à verser une masse de polyuréthane liquide (2) sur une feuille formant support (3) et, après la liaison réalisée par compression de la peau en polyuréthane (2) au corps en mousse (1), à retirer la feuille formant support (3), caractérisé en ce qu'il consiste à sécher la masse de polyuréthane (2) versée sur la feuille formant support (3) et à la presser à l'état encore légèrement collant sur le corps en mousse (1) à revêtir, dont la surface concernée a été munie au préalable d'une colle.

2. Procédé selon la revendication 1, caractérisé en ce qu'il consiste à utiliser comme feuille formant support (3) un papier traité au silicone.

3. Procédé selon la revendication 1 ou 2, caractérisé en ce qu'il consiste à déposer par un procédé hectographique la feuille formant support (3) revêtue d'une masse de polyuréthane (2) sur le corps en mousse (1).

4. Procédé selon l'une des revendications 1 à 3, caractérisé par l'utilisation d'une feuille formant support (3) à surface légèrement gaufrée ou munie d'un modèle.

0 012 849

FIG 1

FIG. 2